# EUROPEAN PATENT APPLICATION

(11) **EP 4 583 513 A1**
(43) Date of publication of application: **09.07.2025**
(21) Application number: 23859373.5
(22) Date of filing: 30.08.2023
(51) Int. Cl.: H04N 21/2187

(54) **INFORMATION PROCESSING METHOD AND APPARATUS**

(30) Priority: 30.08.2022 CN 202211049967
(71) Applicant: Beijing Zitiao Network Technology Co., Ltd., Beijing 100190 (CN)
(72) Inventor: LI, Yijie, Beijing 100028 (CN); FANG, Angxiang, Beijing 100028 (CN)
(74) Representative: Dentons UK and Middle East LLP
(86) International application number: PCT/CN2023/115688
(87) International publication number: WO 2024/046344

(57) **Abstract**

Disclosed in the present application is an information processing method, comprising: displaying first comment information on a live-streaming room interface; and in response to a trigger operation for the first comment information, displaying an interaction identifier corresponding to the first comment information, wherein the interaction identifier comprises a copy identifier, the interaction identifier of the first comment information is used for triggering an interaction operation for the first comment information, and the copy identifier corresponding to the first comment information is used for triggering a copy operation for the first copy information. A user can trigger a trigger operation for first comment information for a copy identifier; and correspondingly, a client can display a first character input area in a live-streaming room interface in response to the trigger operation for the copy identifier, and can input the first comment information into the first character input area.

## Description

The present disclosure claims the priority to Chinese patent application No. 202211049967.X filed in the China National Intellectual Property Administration on August 30, 2022, with the title of "information processing method and apparatus" and the entire contents of which are incorporated by reference in the present disclosure.

### TECHNICAL FIELD

The present disclosure relates to the technical field of computers, and in particular to an information processing method and apparatus.

### BACKGROUND

With the development of computer technology, users can watch live streaming through applications capable of providing live streaming functions. In order to increase the interesting of the live streaming, the applications provide a live streaming comment function, so that users can post comments in the process of watching the live streaming.

At present, the functions related to live streaming comments are relatively simple, which cannot meet the diverse needs of users and affects the user experience.

### SUMMARY

In order to solve or partially solve the above technical problems, the embodiments of the present disclosure provide an information processing method and apparatus.

In a first aspect, the embodiments of the present disclosure provide an information processing method, including:
displaying first comment information on a live-stream room interface;
displaying an interactive identifier corresponding to the first comment information in response to a trigger operation for the first comment information, where the interactive identifier includes a copy identifier, and the copy identifier is used for triggering a copy operation for the first comment information; and
displaying a first character input area on the live-stream room interface in response to a trigger operation for the copy identifier, and inputting the first comment information into the first character input area.

Optionally, the method further includes:
displaying an information display card of a publishing object corresponding to the first comment information in response to the trigger operation for the first comment information, where an identifier of the publishing object and an interactive control are displayed on the information display card; and
establishing an association relationship with the publishing object in response to a trigger operation for the interactive control.

Optionally,
the displaying first comment information on the live-stream room interface includes:
displaying the first comment information at a first display position of the live-stream room interface; and
the displaying the copy identifier corresponding to the first comment information in response to the trigger operation for the first comment information includes:
displaying the first comment information and the copy identifier at a second display position of the live-stream room interface in response to the trigger operation for the first comment information displayed at the first display position.

Optionally, the interactive identifier further includes a directional identifier, which is used for triggering a reply operation for the first comment information; the method further includes:
displaying a second character input area on the live-stream room interface in response to a trigger operation for the directional identifier, and inputting a directional identification mark and a publishing object of the first comment information into the second character input area.

Optionally, the displaying first comment information on the live-stream room interface includes:
displaying the first comment information in a first display area of the live-stream room interface in a scrolling manner;
the method further includes:
   fixedly displaying a first hot comment identifier corresponding to the first comment information in a second display area of the live-stream room interface in a case where a number of interactions corresponding to the first comment information meets a preset condition.

Optionally, the method further includes:
replacing the first hot comment identifier corresponding to the first comment information with a second hot comment identifier corresponding to second comment information in response to a number of interactions corresponding to the second comment information meeting the preset condition;
   or
canceling displaying a hot comment identifier corresponding to the first comment information in response to a display duration of the first hot comment identifier exceeding a preset duration.

Optionally, the method further includes:
sending the first comment information corresponding to a first comment identifier in response to a trigger operation for the first hot comment identifier displayed in the second display area.

Optionally, the method further includes:
in a case where a number of interactions corresponding to third comment information meets the preset condition, in response to a trigger operation acting on a comment control of the live-stream room interface, displaying a third character input area, and displaying the third comment information in a candidate display area as a character candidate; and
inputting the third comment information into the third character input area in response to a trigger operation for the third comment information displayed in the candidate display area.

In a second aspect, the embodiments of the present disclosure provide an information processing apparatus, including:
a first display unit, configured to display first comment information on a live-stream room interface;
a second display unit, configured to display an interactive identifier corresponding to the first comment information in response to a trigger operation for the first comment information, where the interactive identifier includes a copy identifier, and the copy identifier is configured to trigger a copy operation for the first comment information; and
a third display unit, configured to display a first character input area on the live-stream room interface in response to a trigger operation for the copy identifier; and
a first input unit, configured to input the first comment information into the first character input area.

Optionally, the apparatus further includes:
a fourth display unit, configured to display an information display card of a publishing object corresponding to the first comment information in response to the trigger operation for the first comment information, where an identifier of the publishing object and an interactive control are displayed on the information display card; and
an establishing unit, configured to establish an association relationship with the publishing object in response to a trigger operation for the interactive control.

Optionally,
the first display unit is configured to:
display the first comment information at a first display position of the live-stream room interface; and
the second display unit is configured to:
   display the first comment information and the interactive identifier at a second display position of the live-stream room interface in response to the trigger operation for the first comment information displayed at the first display position.

Optionally, the interactive identifier further includes a directional identifier, which is used for triggering a reply operation for the first comment information; the apparatus further includes:
a fifth display unit, configured to display a second character input area on the live-stream room interface in response to a trigger operation for the directional identifier;
a second input unit, configured to input a directional identification mark and a publishing object of the first comment information into the second character input area.

Optionally, the first display unit is configured to:
display the first comment information in a first display area of the live-stream room interface in a scrolling manner;
the apparatus further includes:
   a sixth display unit, configured to fixedly display a first hot comment identifier corresponding to the first comment information in a second display area of the live-stream room interface in a case where a number of interactions corresponding to the first comment information meets a preset condition.

Optionally, the apparatus further includes:
a replacement unit, configured to replace the first hot comment identifier corresponding to the first comment information with a second hot comment identifier corresponding to the second comment information in response to a number of interactions corresponding to the second comment information meeting the preset condition;
   or
a display canceling unit, configured to cancel displaying a hot comment identifier corresponding to the first comment information in response to a display duration of the first hot comment identifier exceeding a preset duration.

Optionally, the apparatus further includes:
a sending unit, configured to send the first comment information corresponding to a first comment identifier in response to a trigger operation for the first hot comment identifier displayed in the second display area.

Optionally, the apparatus further includes:
a seventh display unit, configured to, in a case where a number of interactions corresponding to third comment information meets the preset condition, in response to a trigger operation acting on a comment control of the live-stream room interface, display a third character input area, and display the third comment information in a candidate display area as a character candidate; and
a third input unit, configured to input the third comment information into the third character input area in response to a trigger operation for the third comment information displayed in the candidate display area.

In a third aspect, the embodiments of the present disclosure provide a device, including a processor, and a memory,
where the processor is used to execute an instruction stored in the memory, enabling the device to execute any method described in the first aspect.

In a fourth aspect, the embodiments of the present disclosure provide a computer readable storage medium, including an instruction, where the instruction indicates a device to execute any method described in the first aspect.

In a fifth aspect, the embodiments of the present disclosure provide a computer program product, where the computer program product, when run on a computer, causes the computer to execute any method described in the first aspect.

### BRIEF DESCRIPTION OF DRAWINGS

In order to more clearly illustrate the technical solutions in the embodiments of the present disclosure or in prior art, the drawings to be used in the description of the embodiments or prior art will be briefly described below. Obviously, the drawings in the following description are only some embodiments recorded in the present disclosure. For those ordinarily skilled in the art that other drawings can be obtained on the basis of these drawings without inventive work.
Fig. 1 is a flow diagram of an information processing method according to an embodiment of the present disclosure;
Fig. 2a is a schematic diagram of a live-stream room interface according to an embodiment of the present disclosure;
Fig. 2b is a schematic diagram of a live-stream room interface according to an embodiment of the present disclosure;
Fig. 2c is a schematic diagram of a live-stream room interface according to an embodiment of the present disclosure;
Fig. 2d is a schematic diagram of a live-stream room interface according to an embodiment of the present disclosure;
Fig. 2e is a schematic diagram of a live-stream room interface according to an embodiment of the present disclosure;
Fig. 3 is a structural diagram of an information processing apparatus according to an embodiment of the present disclosure.

### DETAILED DESCRIPTION

In order to enable those skilled in the art to better understand the present disclosure, the following will be combined with the drawings in the present disclosure to clearly and completely describe the technical solutions in the present disclosure. Obviously, the described embodiments are only part of the present disclosure, not all of the embodiments. Based on the embodiments in the present disclosure, all other embodiments obtained by ordinary technicians in this field without creative work are within the scope of protection of this application.

Through research, the inventor of the present disclosure found that the functions related to live streaming comments are relatively simple at present, which cannot meet the diverse needs of users. In an example, a user needs to manually input comments desired to post when wanting to post comments similar to or the same as those posted by other users, which is cumbersome for the user and affects the user experience.

In order to solve the above-mentioned problem, an embodiment of the present disclosure provides an information processing method and apparatus.

Compared with the related art, the embodiment of the present disclosure has the following advantages:
A client may display first comment information on a live-stream room interface. A user can trigger an operation for the first comment information displayed on the live-stream room interface. Correspondingly, the client may display an interactive identifier corresponding to the first comment information in response to a trigger operation for the first comment information. The interactive identifier includes a copy identifier. The interactive identifier of the first comment information is used for triggering an interactive operation for the first comment information, and the copy identifier corresponding to the first comment information is used for triggering a copy operation for first copy information. The user can perform a trigger operation for the first comment information by triggering the copy identifier. Correspondingly, in response to the trigger operation for the copy identifier, the client may display a first character input area on the live-stream room interface, and input the first comment information into the first character input area. By employing this scheme, the user can quickly input a first comment into the first character input area by triggering the copy identifier, which simplifies the interactive operation, improves the interactive efficiency, is beneficial to efficiently posting a comment with the same or related content as the first comment information, and improves the interactive atmosphere and experience.

Various non-restrictive embodiments of the present disclosure will be described below in detail with reference to the accompanying drawings.

### Exemplary method

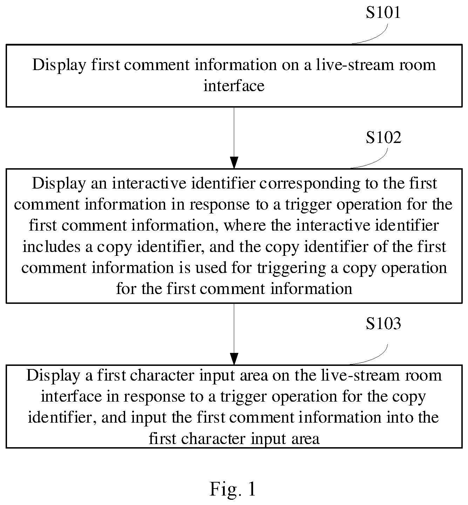

Referring to Fig. 1, Fig. 1 is a flow diagram of an information processing method according to an embodiment of the present disclosure. In this embodiment, the method may be executed by a client, and the client, for example, may be a client that is logged in with a target account. The method, for example, may include the following steps: S101-S103.

S101: displaying first comment information on a live-stream room interface.

In an embodiment of the present disclosure, the first comment information may be comment information posted by an account in the live-stream room, and may include characters, and/or emotion icons. In an example, a publishing object identifier of the first comment information can be displayed on the live-stream room interface, for example, an account name of a publishing account of the first comment information can be displayed.

In an example, the first comment information may be displayed at a first display position on the live-stream room interface.

In an embodiment of the present disclosure, multiple pieces of comment information may be displayed on the live-stream room interface. The multiple pieces of comment information are displayed on the live-stream room interface in a dynamic manner, for example, the multiple pieces of comment information are displayed on the live-stream room interface in a scrolling manner. In an example, the multiple pieces of comment information are displayed in a first display area of the live-stream room interface in a scrolling manner, e.g., a public screen area. The first display position may be a display position included in the first display area.

S102: displaying an interactive identifier corresponding to the first comment information in response to a trigger operation for the first comment information, where the interactive identifier includes a copy identifier, and the copy identifier of the first comment information is used for triggering a copy operation for the first comment information.

A user may trigger an operation for the first comment information, for example, may trigger a click operation or long-press operation for the first comment information. Correspondingly, the client may display the interactive identifier corresponding to the first comment information in response to the trigger operation for the first comment information. The interactive identifier may at least include a copy identifier. The copy identifier of the first comment information is used for triggering a copy operation for the first comment information. In an example, the copy identifier may be a corresponding copy icon. In an embodiment of the present disclosure, the interactive identifier corresponding to the first comment information is used for triggering an interactive operation for the first comment information. The copy identifier corresponding to the first comment information is used for triggering the copy operation for the first comment information.

In an example, the client may display the interactive identifier around a display area of the first comment information on the live-stream room interface. For example, the interactive identifier is displayed at the first display position.

In another example, the client may correspondingly display the first comment information and the interactive identifier at a second display position on the live-stream room interface. For example, the client may correspondingly display the first comment information and the copy identification in the form of a floating layer on a video playing interface. In this case, for the comment information displayed on the video playing interface in a scrolling manner, even if the comment information displayed on the current video playing interface no longer includes the first comment information, the user can view the first comment information and the copy identifier through the floating layer.

In addition, in an example, the client may also display an information display card of a publishing object of the first comment information in response to the trigger operation for the first comment information, e.g., a following card. In an example, an identifier of the publishing object and an interactive control are displayed on the information display card.

The embodiment of the present disclosure has no specific limitation on the identifier of the publishing object. The identifier of the publishing object, for example, may include a name of the publishing object, or an avatar of the publishing object, and so on.

The embodiment of the present disclosure has no specific limitation on the interactive control, and the interactive control is used for triggering an interactive operation. The interactive control includes, but is not limited to, a following control. The user may trigger an operation of following the publishing object through the following control.

In an example, the user may trigger an operation for the interactive control. Correspondingly, the client may establish an association relationship with the publishing object in response to the trigger operation for the interactive control. For example, the user may trigger the operation of following the publishing object for the following control, thus following the publishing object.

In addition, a label of the publishing object and the like may also be displayed on the information display card. The label of the publishing object includes, but is not limited to, the type of the publishing object, honors obtained by the publishing object, etc.

In an example, the information display card and the correspondingly displayed first comment information and copy identifier may be displayed adjacent to each other on the live-stream room interface, thus facilitating the user to view the information display card and the correspondingly displayed first comment information and copy identifier.

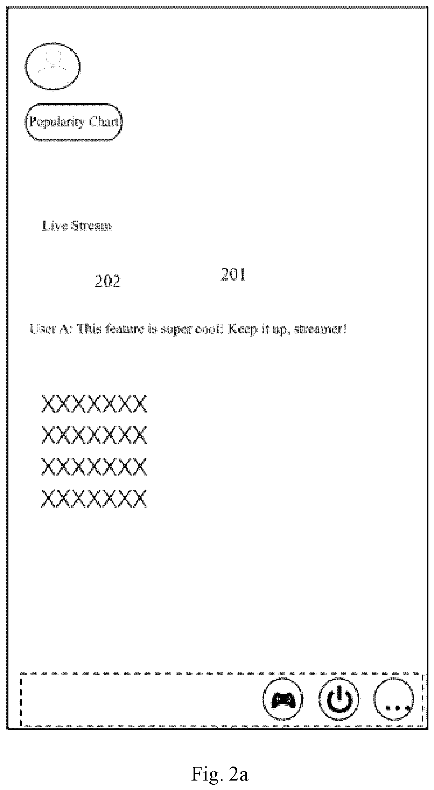

An example will be given with reference to Fig. 2a. Fig. 2a is a schematic diagram of a live-stream room interface according to an embodiment of the present disclosure. As shown in Fig. 2a, the first comment information 201 and an account name 202 of a publishing account of the first comment information 201 are displayed on the live-stream room interface.

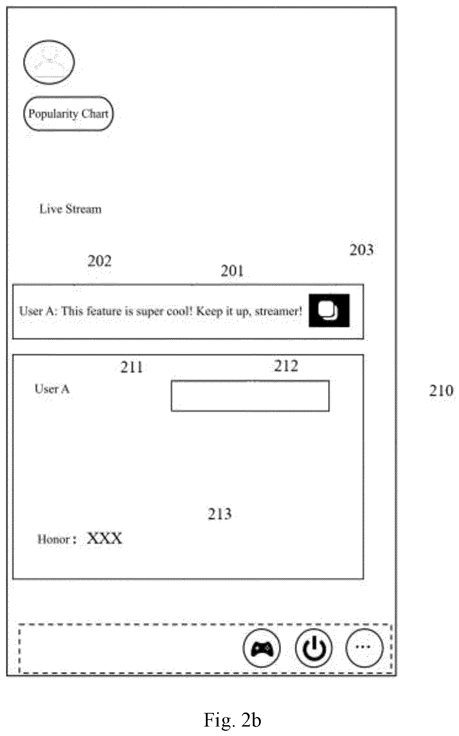

After the user triggers the operation for the first comment information 201, the live-stream room interface displayed at the client is switched as shown in Fig. 2b. As shown in Fig. 2b, the first comment information 201, the account name 202 and the copy identifier 203 are displayed on the live-stream room interface. In addition, the information display card 210 of the publishing account is also displayed on the live-stream room interface, the account information card includes an account name 211, a following identifier 212, and the obtained honors 213, etc.

S103: displaying a first character input area on the live-stream room interface in response to a trigger operation for the copy identifier, and inputting the first comment information into the first character input area.

In an example, after the copy identifier of the first comment information is displayed at the client, the user may trigger an operation for the copy identifier, for example, clicking the copy identifier. Correspondingly, the client may display the first character input area on the live-stream room interface in response to the trigger operation for the copy identifier, and automatically inputs the first comment information into the first character input area. In other words, in an example, the client may wake up an input method application in response to the trigger operation for the copy identifier, such that the client may display the first character input area provided by the input method application and automatically fill the first comment information into the first character input area.

In an embodiment of the present disclosure, the first character input area may be used for the inputting of characters and emotion icons, or other forms of information such as pictures. Similarly, a second character input area and a third character input area below may also be used for the inputting of characters, emotion icons, and other forms of information such as pictures.

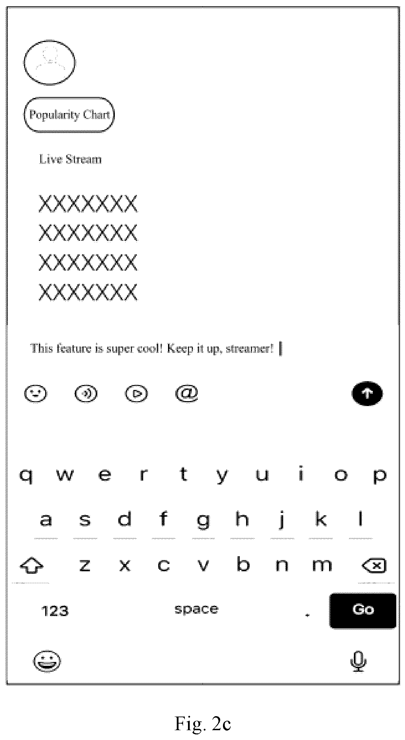

With reference to Fig. 2c, it may be understood that after the user triggers the operation for the copy identifier 203, the live-stream room interface displayed at the client is switched to as shown in Fig. 2c. As shown in Fig. 2c, the first comment information 210 is directly input into the first character input area.

In an example, after the first comment information is input into the first character input area, the user may further trigger an enter-on-screen operation, such as, clicking the "comment send" control on the live-stream room interface, thus sending the first comment information. In another example, after the first comment information is input into the first character input area, the user may continue to edit characters in the first character input area, such as modifying some characters, adding characters, or deleting some characters, etc., and further trigger the enter-on-screen operation, thus sending comment information similar to the first comment information.

Thus, with this scheme, the user can quickly input a first comment information into the first character input area by triggering the copy identifier, thus getting the comments desired to post based on the first comment information, which improves the user experience.

Considering that the user may have a need to reply to the first comment information, in an example, the interactive identifier corresponding to the first comment information may also include a directional identifier, which is used for triggering a reply operation for the first comment information.

In an example, the directional identifier may be displayed around the copy identifier.

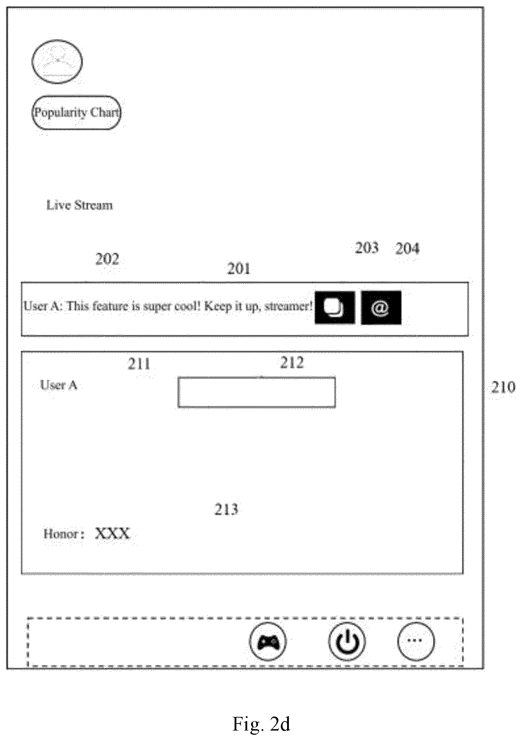

It may be understood from Fig. 2d that the directional identifier 204 is displayed around the copy identifier 203.

In an example, after the directional identifier corresponding to the first comment information is displayed on the client, the user may trigger an operation for the directional identifier, such as clicking the directional identifier. Correspondingly, the client may display a second character input area on the live-stream room interface in response to the trigger operation for the directional identifier, and automatically inputs a directional identification mark and a directional object into the second character input area. The embodiment of the present disclosure has no specific limitation on the directional object, and the directional object may be an object posting comments on the live-stream room interface. In an example, the directional object may be a publishing object of the first comment information. The publishing object of the first comment information, for example, may be a publisher/publishing account of the first comment information. In this case, the client may input the directional identification mark and the publishing account of the first comment information into the second character input area in response to the trigger operation for the directional identifier. In other words, in an example, the client may wake up an input method application in response to the trigger operation for the directional identifier, such that the client may display the second character input area provided by the input method application and automatically fill the directional identification mark and the publishing account into the second character input area. The directional identification mark and the publishing account of the first comment information are input into the second character input area, for example, the directional identification mark and the account name of the publishing account can be input into the second character input area. The directional identifier may be understood as a directional button, which is used for triggering the input of the directional identification mark, and then send information desired to be directionally sent to the directional object. The directional identification mark is automatically input and displayed after the directional identifier is triggered. The directional identification mark is used for indicating that the currently input information is directionally sent to the directional object, i.e., the information sent for the directional object.

The embodiment of the present disclosure has no specific limitation on the directional identification mark. In an example, the directional identification mark may be "@".

Considering that the user may have a need to thumb up the first comment information when having high recognition on the first comment information, in an example, the interactive identifier corresponding to the first comment information may also include a thumb-up identifier, which is used for triggering a reply operation for the first comment information.

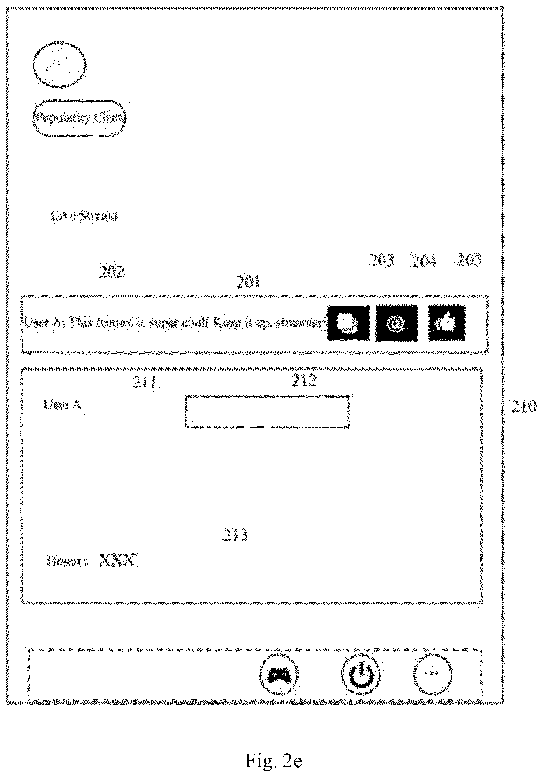

In an example, the thumb-up identifier may be displayed around the copy identifier or the copy identifier. With reference to Fig. 2e, it may be understood that the thumb-up identifier 205 is displayed around the directional identifier 204.

In an example, if the number of interactions of the first comment information meets a preset condition, for example, the number of interactions is higher than a preset threshold, for another example, multiple pieces of comment information are ranked according to the order of the number of interactions from most to least, if the number of interactions of the first comment is ranked first, the possibility that the user interacts with the first comment information is high. In this case, the scrolling display of the first comment information in the first display area is not conducive to user interaction with the first comment information. Therefore, to facilitate the user to interact with the first comment information, the client may fixedly display a first hot comment identifier corresponding to the first comment information in a second display area of the live-stream room interface. For example, the client may display the first comment information and the first hot comment identifier in a preset pattern. The embodiment of the present disclosure has no specific limitation on the first hot comment identifier, which may include images and/or characters. In this case, in an example, in the specific implementation of " the client displays the first comment information and the first hot comment identifier in a preset pattern", when the first comment information is displayed, the image in the first hot comment identifier may be displayed as a background image of the first comment information, and the characters in the first hot comment identifier are displayed. The embodiment of the present disclosure has no specific limitation on the images and characters included in the first hot comment identifier, and the characters in the first hot comment identifier may be "hot comments", for example.

In an example, a display duration of the first hot comment identifier in the second display area may last for a preset duration. In this way, within the preset duration, the user can trigger an interactive operation with the first comment information based on the first hot comment identifier, thus facilitating the user to interact with the first comment information. Considering that the possibility that the user interacts with the first comment information through the first hot comment identifier is less after the first hot comment identifier is displayed for a preset duration, when the display duration of the first hot comment identifier exceeds the preset duration, the client may cancel displaying the first hot comment identifier, thus present the first hot comment identifier from interfering the user to view other contents on the live-stream room interface.

In another example, if there is a piece of second comment information with the number of interactions meeting the preset condition, the possibility that the user interacts with the second comment information is high. In this case, to facilitate the user to interact with the second comment information, the client may replace the first hot comment identifier with a second hot comment identifier corresponding to the second comment information, such that the user can trigger a corresponding operation based on the second hot comment identifier, and sends the comment information the same as the second comment information. The first hot comment identifier is a hot comment identifier corresponding to the first comment information, and the second hot comment identifier is a hot comment identifier corresponding to the second comment information. The first hot comment identifier is used for indicating the first comment information as the hot comment, and the second hot comment identifier is used for indicating the second comment information as the hot comment. The display patterns of the first hot comment identifier and the second hot comment identifier may be the same or different, and the included images or characters may be the same or different.

The number of interactions of the first comment information mentioned here may be the number of interactions with the first comment information through the interactive identifier of the first comment information. In an example, the number of interactions of the first comment information may be determined according to the number of thumb-ups of the first comment information, the number of copies of the first comment information, and the number of replies of the first comment information.

Similarly, the number of interactions of the second comment information mentioned here may be the number of interactions with the first comment information through the interactive identifier of the first comment information, which will not be repeated here.

The second hot comment identifier may refer to the description about the first hot comment identifier before, and thus will not be described in details here.

In an example, considering that when the number of interactions of the first comment information meets the preset condition, it is indicated that the first comment information can be recognized by most users. In this case, a user corresponding to a target account may also want to post the same comment information as the first comment information. In the embodiment of the present disclosure, the user may trigger an operation for the first hot comment identifier displayed in the second display area, such as, clicking the first hot comment identifier. Correspondingly, the client may send the first comment information as a comment in response to the trigger operation for the first hot comment identifier, thus achieving the effect of rapidly sending the first comment information and improving the user experience.

In an example, the live-stream room interface may include a comment control, and the user can trigger an operation of initiating comments through the comment control. In an example, after the user triggers an operation for the comment control, such as, clicking the comment control, the client may display a third character input area, and the user can input the characters desired to comment in the third character input area. In an example, in order to improve the comment efficiency of the user, character candidates recommended for the user can be displayed in a candidate display area.

The first character input area, the second character input area, and the third character input area are used for inputting comment information, and the display patterns and display positions of which may be the same or different.

Considering that user is more likely to post the comment that is the same as or similar to the comment information with the number of interactions meeting the preset condition, in one example, the client may display third comment information as a character candidate in the candidate display area in the case where the number of interactions corresponding to the third comment information meets the preset condition. The user may trigger an operation for the third comment information displayed in the candidate display area, and correspondingly, the client may input the third comment information into the third character input area in response to the trigger operation for the third comment information displayed in the candidate display area.

In an example, after the third comment information is input into the third character input area, the user may further trigger an enter-on-screen operation, such as, clicking the "comment send" control on the live-stream room interface, thus sending the third comment information. In yet another example, after the third comment information is input into the third character input area, the user may continue to edit the characters in the third character input area, such as modifying some characters, adding characters, or deleting some characters, etc., and further trigger the enter-on-screen operation, thus sending comment information similar to the first comment information.

The number of interactions corresponding to the third comment information may refer to the previous description of the number of interactions of the first comment information, and thus will not be described repeatedly here.

### Exemplary device

Based on the method provided by embodiments above, an embodiment of the present disclosure further provides an apparatus, which is introduced below with reference to the accompanying drawings.

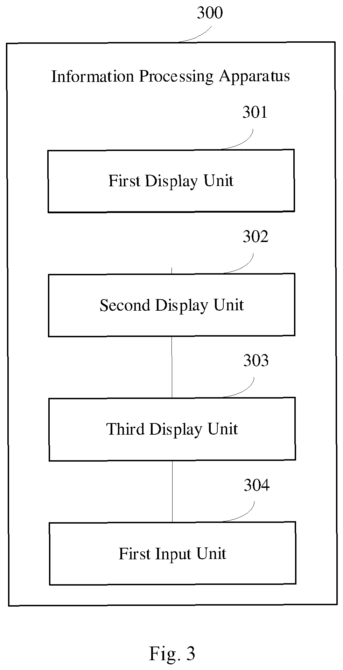

Referring to Fig. 3, Fig. 3 is a structural diagram of an information processing apparatus according to an embodiment of the present disclosure. The apparatus 300, for example, may specifically include: a first display unit 301, a second display unit 302, a third display unit 303, and a first input unit 304.

The first display unit 301 is configured to display first comment information on a live-stream room interface.

The second display unit 302 is configured to display an interactive identifier corresponding to the first comment information in response to a trigger operation for the first comment information. The interactive identifier includes a copy identifier, and the copy identifier is used for triggering a copy operation for the first comment information.

The third display unit 303 is configured to display a first character input area on the live-stream room interface in response to a trigger operation for the copy identifier.

The first input unit 304 is configured to input the first comment information into the first character input area.

Alternatively, the apparatus further includes:
a fourth display unit, configured to display an information display card of a publishing object corresponding to the first comment information in response to the trigger operation for the first comment information, where an identifier of the publishing object and an interactive control are displayed on the information display card; and
an establishing unit, configured to establish an association relationship with the publishing object
in response to a trigger operation for the interactive control.

Alternatively,
the first display unit 301 is configured to
display the first comment information at a first display position of the live-stream room interface.

The second display unit 302 is configured to
display the first comment information and the interactive identifier at a second display position of the live-stream room interface in response to the trigger operation for the first comment information displayed at the first display position.

Alternatively, the interactive identifier further includes a directional identifier, which is used for triggering a reply operation for the first comment information. The apparatus further includes:
a fifth display unit, configured to display a second character input area on the live-stream room interface in response to a trigger operation for the directional identifier; and
a second input unit, configured to input a directional identification mark and a publishing object of the first comment information into the second character input area.

Alternatively, the first display unit 301 is configured to
display the first comment information in a first display area of the live-stream room interface in a scrolling manner.

Alternatively, the apparatus further includes:
a sixth display unit, configured to fixedly display a first hot comment identifier corresponding to the first comment information in a second display area of the live-stream room interface in a case where the number of interactions corresponding to the first comment information meets a preset condition.

Alternatively, the apparatus further includes:
a replacement unit, configured to replace the first hot comment identifier corresponding to the first comment information with a second hot comment identifier corresponding to the second comment information in response to a number of interactions corresponding to the second comment information meeting the preset condition;
   or
a display canceling unit, configured to cancel displaying a hot comment identifier corresponding to the first comment information in response to a display duration of the first hot comment identifier exceeding a preset duration.

Alternatively, the apparatus further includes:
a sending unit, configured to send the first comment information corresponding to the first comment identifier in response to a trigger operation for the first hot comment identifier displayed in the second display area.

Alternatively, the apparatus further includes:
a seventh display unit, configured to, in a case where a number of interactions corresponding to third comment information meets the preset condition, in response to a trigger operation acting on a comment control of the live-stream room interface, display a third character input area and display the third comment information in a candidate display area as a character candidate; and
a third input unit, configured to input the third comment information into the third character input area in response to the trigger operation for the third comment information displayed in the candidate display area.

Since the device 300 is a device corresponding to the live data processing method provided by the above method embodiments, the specific implementations of various units of the apparatus 300 are the same as those of the above method embodiments. Therefore, specific implementations of various units of the apparatus 300 may refer to related description parts of the above method embodiments, and thus will not be described in detail here.

The embodiment of the present disclosure further provides a device, including a processor, and a memory.

The processor is configured to execute an instruction stored in the memory, thus enabling the device to execute the information processing method according to any of above embodiments.

The embodiment of the present disclosure further provides a computer readable storage medium, including an instruction. The instruction is configured to indicate a device to execute the information processing method according to any of above embodiments.

The embodiment of the present disclosure further provides a computer program product, the computer program product, when run on a computer, enables the computer to execute the information processing method according to any of above embodiments.

It may be understood that before using the technical solutions disclosed in various embodiments of the present disclosure, the user should be informed of the types, scope of use, use scenarios, etc. of involved personal information in an appropriate way, and authorization can be obtained from the user. For example, in response to receiving an active request of the user, prompt information is sent to the user to clearly remind the user that a requested operation needs to acquire and use the personal information of the user. Therefore, the user can independently choose whether to provide personal information to software or hardware such as electronic devices, applications, servers or storage media that perform the operation of the technical solution of the present disclosure according to the prompt information.

As an alternative but non-restrictive implementation, in response to receiving the active request of the user, a way of sending the prompt information to the user may be, for example, a pop-up window, in which the prompt information can be presented in text. In addition, the pop-up window can also carry a selection control for the user to choose "agree" or "disagree" to provide personal information to the electronic device.

It may be understood that the above process of informing and obtaining user authorization is only schematic, which does not limit the implementation of the present disclosure. Other ways to meet relevant laws and regulations may also be applied to the implementation of the present disclosure.

After considering the specification and practicing the invention disclosed here, those skilled in the art will easily think of other implementation methods of the present disclosure. The present disclosure is intended to cover any variation, use or adaptive change of the present disclosure, which follows the general principles of the present disclosure and includes common knowledge or conventional technical means in the technical field of the present disclosure that are not disclosed in the present disclosure. The specification and embodiments are only regarded as exemplary, and the true scope and spirit of the present disclosure are indicated by the following claims.

It should be understood that the present disclosure is not limited to the precise structure described above and shown in the drawings, and various modifications and changes can be made without departing from its scope. The scope of the present disclosure is limited only by the attached claims.

The above is only a preferred embodiment of the present disclosure and is not intended to limit the present disclosure. Any modifications, equivalent substitutions, improvements, etc. made within the spirit and principles of the present disclosure shall be included in the scope of protection of the present disclosure.

## Claims

1. An information processing method, comprising:
displaying first comment information on a live-stream room interface;
displaying an interactive identifier corresponding to the first comment information in response to a trigger operation for the first comment information, wherein the interactive identifier comprises a copy identifier, and the copy identifier is used for triggering a copy operation for the first comment information; and
displaying a first character input area on the live-stream room interface in response to a trigger operation for the copy identifier, and inputting the first comment information into the first character input area.

2. The method according to claim 1, further comprising:
displaying an information display card of a publishing object corresponding to the first comment information in response to the trigger operation for the first comment information, wherein an identifier of the publishing object and an interactive control are displayed on the information display card; and
establishing an association relationship with the publishing object in response to a trigger operation for the interactive control.

3. The method according to claim 1, wherein
the displaying first comment information on the live-stream room interface comprises:
displaying the first comment information at a first display position of the live-stream room interface; and
the displaying the interactive identifier corresponding to the first comment information in response to the trigger operation for the first comment information comprises:
displaying the first comment information and the interactive identifier at a second display position of the live-stream room interface in response to the trigger operation for the first comment information displayed at the first display position.

4. The method according to claim 1, wherein the interactive identifier further comprises a directional identifier, which is used for triggering a reply operation for the first comment information; the method further comprises:
displaying a second character input area on the live-stream room interface in response to a trigger operation for the directional identifier, and inputting a directional identification mark and a publishing object of the first comment information into the second character input area.

5. The method according to claim 1, wherein the displaying first comment information on the live-stream room interface comprises:
displaying the first comment information in a first display area of the live-stream room interface in a scrolling manner;
the method further comprises:
fixedly displaying a first hot comment identifier corresponding to the first comment information in a second display area of the live-stream room interface in a case where a number of interactions corresponding to the first comment information meets a preset condition.

6. The method according to claim 5, further comprising:
replacing the first hot comment identifier corresponding to the first comment information with a second hot comment identifier corresponding to second comment information in response to a number of interactions corresponding to the second comment information meeting the preset condition;
or
canceling displaying a hot comment identifier corresponding to the first comment information in response to a display duration of the first hot comment identifier exceeding a preset duration.

7. The method according to claim 5, further comprising:
sending the first comment information corresponding to a first comment identifier in response to a trigger operation for the first hot comment identifier displayed in the second display area.

8. The method according to claim 1, further comprising:
in a case where a number of interactions corresponding to third comment information meets the preset condition, in response to a trigger operation acting on a comment control of the live-stream room interface, displaying a third character input area, and displaying the third comment information in a candidate display area as a character candidate; and
inputting the third comment information into the third character input area in response to a trigger operation for the third comment information displayed in the candidate display area.

9. An information processing apparatus, comprising:
a first display unit, configured to display first comment information on a live-stream room interface;
a second display unit, configured to display an interactive identifier corresponding to the first comment information in response to a trigger operation for the first comment information, wherein the interactive identifier comprises a copy identifier, and the copy identifier is configured to trigger a copy operation for the first comment information; and
a third display unit, configured to display a first character input area on the live-stream room interface in response to a trigger operation for the copy identifier; and
a first input unit, configured to input the first comment information into the first character input area.

10. A device, comprising a processor, and a memory,
wherein the processor is used to execute an instruction stored in the memory, enabling the device to execute the method according to any one of claims 1 to 8.

11. A computer readable storage medium, comprising an instruction, wherein the instruction indicates a device to execute the method according to any one of claims 1 to 8.

12. A computer program product, wherein the computer program product, when run on a computer, causes the computer to execute the method according to any one of claims 1 to 8.
